# EUROPEAN PATENT APPLICATION

(11) **EP 3 316 455 A1**
(43) Date of publication of application: **02.05.2018**
(21) Application number: 15896644.0
(22) Date of filing: 29.06.2015
(51) Int. Cl.: H02K 5/04

(54) **MOTOR, WASHING PUMP, DISHWASHER AND MOTOR MANUFACTURING METHOD**

(71) Applicant: Guangdong Welling Motor Manufacturing Co., Ltd., Foshan, Guangdong 528311 (CN)
(72) Inventor: PENG, Xiaojun, Foshan Guangdong 528311 (CN); SHI, Changzhong, Foshan Guangdong 528311 (CN); GENG, Wenji, Foshan Guangdong 528311 (CN)
(74) Representative: RGTH
(86) International application number: PCT/CN2015/082636
(87) International publication number: WO 2017/000113

(57) **Abstract**

The present disclosure is applicable to a technical filed of electric motor and provides an electric motor, a washing pump, a dishwasher and a manufacturing method for an electric motor. The electric motor includes a stator assembly and a rotor assembly rotatably disposed in the stator assembly. The rotor assembly includes a rotating shaft, and the stator assembly includes a stator core and a winding wire wound around the stator core. The stator assembly further includes an injection-molded enveloping portion enveloping outer sides of the winding wire and the stator core, and a front cover and a rear cover for supporting the rotor assembly are embedded in the injection-molded enveloping portion or integrally molded with the injection-molded enveloping portion. The washing pump includes the above electric motor. The above washing pump is connected to the dishwasher. The manufacturing method is used for manufacturing the above electric motor. According to the electric motor, the washing pump, the dishwasher and the manufacturing method for the electric motor provided by the present disclosure, the electric motor has low noise and vibration, which can effectively improve the user experience. The stator assembly is directly enveloped by injection molding to form the injection-molded enveloping portion, so the manufacturing process is simple, the material cost and the production cost are low, and the electric motor exhibits a great waterproof effect and high reliability.

## Description

### FIELD

The present disclosure relates to a technical field of electric motor, and particularly to an electric motor, a washing pump, a dishwasher and a manufacturing method for an electric motor.

### BACKGROUND

In current washing appliances, such as a dishwasher, an induction electric pump, a brushless DC electric motor (BLDC) pump, a permanent magnet synchronous pump, or a DC brush pump is adopted as a washing pump. A main drawback of the BLDC pump is the high cost, and the cost has a large fluctuation if a rare earth material is used for a rotor. For the permanent magnet synchronous pump, a start noise is high and the electric motor has low efficiency. The DC brush pump has a high noise and a relatively short life. In the induction electric pump, an end cover in the current industry is designed to be an aluminum end cover or a plastic end cover, the cost is high, and the noise is relatively large. Moreover, for the electric motor in the washing pump of the conventional dishwasher mentioned above, there are many manufacturing procedures and the production cost is high. In addition, the electric motor exhibits a poor waterproof performance, and defects such as an electric leakage or a short circuit are easily caused when a water leakage appears at a surface of the electric motor, so the reliability is poor.

### SUMMARY

An objective of the present disclosure seeks to overcome the defects existing in the related art, so an electric motor, a washing pump, a dishwasher and a manufacturing method for an electric motor are provided, which exhibit a good waterproof effect, high reliability and a low cost.

A technical solution of the present disclosure discloses: an electric motor, including a stator assembly and a rotor assembly rotatably disposed in the stator assembly, the rotor assembly including a rotating shaft, the stator assembly including a stator core and a winding wound around the stator core, the stator assembly further includes an injection-molded enveloping portion enveloping outer sides of the winding and the stator core, and a front cover and a rear cover for supporting the rotating shaft are embedded in the injection-molded enveloping portion or integrally molded with the injection-molded enveloping portion.

Alternatively, the front cover is pressed and embedded in the injection-molded enveloping portion or is placed in an injection mould to be positioned during injection molding of the injection-molded enveloping portion; the rear cover is pressed and embedded in the injection-molded enveloping portion or is placed in the injection mould to be positioned during the injection molding of the injection-molded enveloping portion.

Alternatively, a power line is connected to the winding, and an end of the power line connected with the winding is enveloped by the injection-molded enveloping portion.

Alternatively, the injection-molded enveloping portion has a first accommodating groove for accommodating the front cover, the front cover is pressed and embedded in the first accommodating groove in an interference manner, a first bearing is provided in the front cover, and the rotating shaft runs through the first bearing.

Alternatively, the injection-molded enveloping portion has a second accommodating groove for accommodating the rear cover, an outer side wall of the rear cover abuts a side wall of the second accommodating groove, and an end of the rear cover abuts a bottom of the second accommodating groove, the rear cover is integrally molded with a flange at an outer side thereof, the flange is fitted and embedded in the side wall of the second accommodating groove a second bearing is provided in the rear cover, and the rotating shaft runs through the second bearing.

Alternatively, a ventilation blade is connected to the rotor assembly, the stator assembly has an inner cavity for accommodating the ventilation blade, and the injection-molded enveloping portion is provided with a ventilation hole communicated with the inner cavity.

The present disclosure further provides a washing pump, the washing pump includes a lower pump housing, the washing pump further includes the electric motor mentioned above, and the electric motor is connected to the lower pump housing.

Alternatively, the lower pump housing has a protruding post, and the stator assembly of the electric motor has a positioning hole for the protruding post to be inserted therein; or, the stator assembly of the electric motor has a protruding post, and the lower pump housing has a positioning hole for the protruding post to be inserted therein.

Alternatively, a capacitor mounting foot is provided at a side surface of the lower pump housing, the capacitor mounting foot includes a capacitor contacting wall in contact with a capacitor and a connecting rib connected between the capacitor contacting wall and a side wall of the lower pump housing; or, the capacitor mounting foot is integrally injection-molded with the injection-molded enveloping portion.

Alternatively, the capacitor contacting wall exhibits an arc shape, two connecting ribs are provided, and the capacitor contacting wall, the two connecting ribs and the side surface of the lower pump housing form a closed annular structure.

The present disclosure further provides a dishwasher, the dishwasher includes a dishwasher body, and the dishwasher body is connected with the washing pump mentioned above.

The present disclosure further provides a manufacturing method for an electric motor, including:
producing a stator core and a rotor assembly;
winding a winding wire upon the stator core;
connecting a power line to the winding wire to form a semi-finished stator;
placing the semi-finished stator in an injection mould to injection-mold an injection-molded enveloping portion enveloping outer sides of the winding wire and the stator core;
pressing and embedding a front cover or/and a rear cover for supporting the rotor assembly in the injection-molded enveloping portion, or placing the front cover or/and the rear cover for supporting the rotor assembly in the injection mould to be positioned through injection molding during injection molding of the injection-molded enveloping portion, so as to obtain a stator assembly; and
rotatably connecting the rotor assembly in the stator assembly.

In the electric motor, the washing pump, the dishwasher and the manufacturing method for the electric motor provided by the present disclosure, the front cover and the rear cover can be injection-molded and positioned together with the stator assembly while the stator assembly is enveloped by injection molding, or can also be embedded in and secured to the stator assembly by means of being pressed after the injection molding is finished. An assembling process of the front cover and the rear cover has high accuracy, so as to reduce the noise and vibration of the electric motor, thus effectively enhancing the user experience. The stator assembly is enveloped directly by injection molding to form the injection-molded enveloping portion, and an end cover is not needed to be mounted, such that the manufacturing process is simple and the material cost and the production cost are low. In addition, the stator assembly is entirely enveloped with the injection-molded enveloping portion, so the electric motor has a great waterproof effect, and defects such as an electric leakage or a short circuit are prevented from being caused, thus exhibiting great reliability.

### BRIEF DESCRIPTION OF THE DRAWINGS

To describe the technical solutions in embodiments of the present disclosure more clearly, accompanying drawings required to be used in the embodiments are briefly introduced in the following. Apparently, the accompanying drawings in the following description show merely some embodiments of the present disclosure, those ordinarily skilled in the art can also obtain other drawings based on these accompanying drawings without creative efforts.
Fig. 1 is a perspective view of a semi-finished stator of an electric motor provided in an embodiment of the present disclosure;
Fig. 2 is a perspective view of a stator assembly of an electric motor provided in an embodiment of the present disclosure;
Fig. 3 is a plan view of a stator assembly of an electric motor provided in an embodiment of the present disclosure;
Fig. 4 is a sectional view taken along line A-A in Fig. 3;
Fig. 5 is a partial enlarged view of portion A in Fig. 4;
Fig. 6 is a perspective view of an electric motor provided in an embodiment of the present disclosure;
Fig. 7 is a perspective view of an electric motor provided in an embodiment of the present disclosure;
Fig. 8 is a perspective view of a lower pump housing of a washing pump provided in an embodiment of the present disclosure;
Fig. 9 is a perspective view of a washing pump provided in an embodiment of the present disclosure;
Fig. 10 is a plan view of a washing pump provided in an embodiment of the present disclosure;
Fig. 11 is a sectional view taken along line B-B in Fig. 10;
Fig. 12 is an exploded perspective view of a dishwasher provided in an embodiment of the present disclosure.

### DETAILED DESCRIPTION

To make objectives, technical solutions, and advantages of the present disclosure clear, the present disclosure will be further described in detail below with reference to the accompanying drawings and embodiments. It should be understood that the specific embodiments described herein are merely intended to explain the present disclosure, but not intended to limit this disclosure.

It should be noted that when an element is referred to as being "fixed to" or "disposed to" another element, the element can be directly provided to another element or there may be an intermediate element at the same time. When an element is referred to as being "connected to" another element, the element can be directly connected to another element or there may be an intermediate element at the same time.

It should also be noted that, terms such as left, right, upper and lower, in the embodiments of the present disclosure are merely relative concepts with respect to each other or are defined with reference to a normal usage state of the product, and should not be considered to be restrictive.

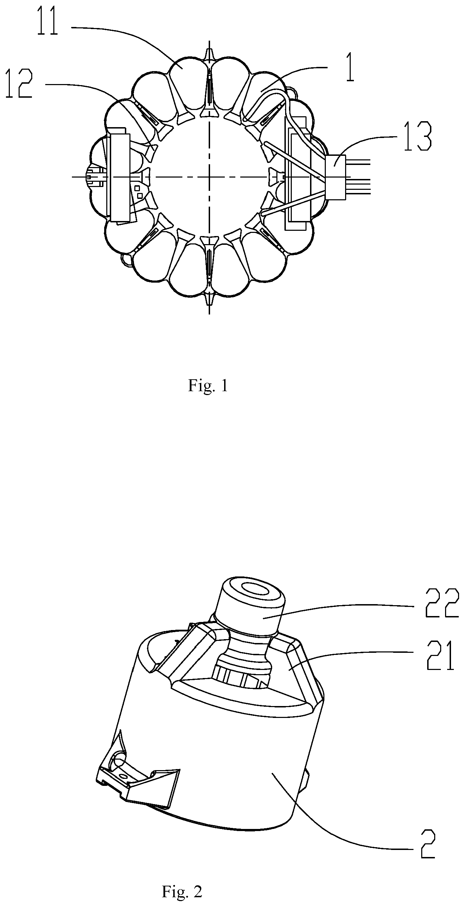

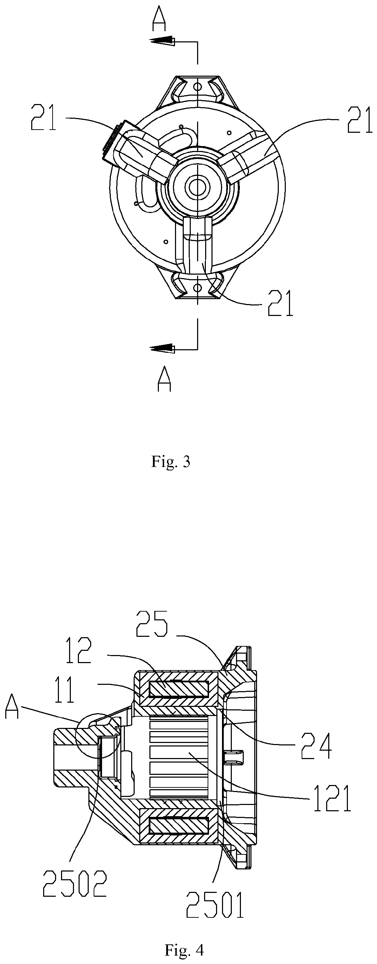

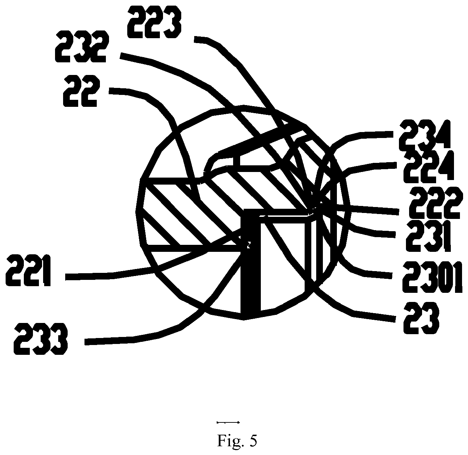

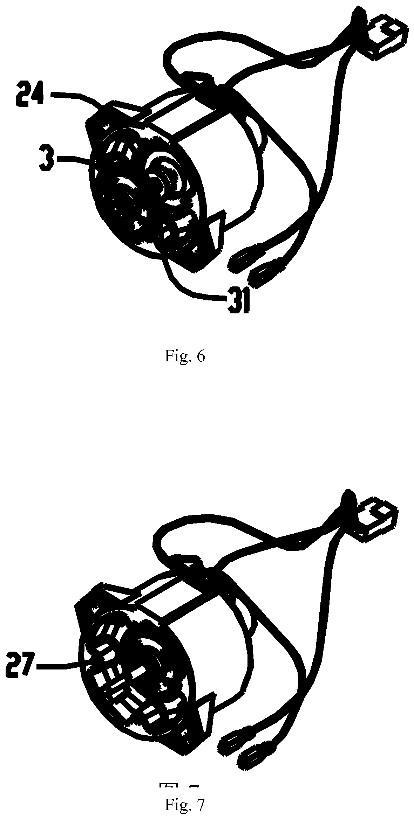

As illustrated in Fig. 1 to Fig. 7, an electric motor is provided by embodiments of the present disclosure, and the electric motor can serve as an electric motor of a washing electrical appliance, such as an electric motor in a washing pump of a dishwasher. The electric motor includes a stator assembly 2 and a rotor assembly 7 rotatably disposed in the stator assembly 2. The rotor assembly 7 includes a rotating shaft 72. The stator assembly 2 includes a stator core 12 and a winding 11 wound around the stator core 12, and the stator assembly 2 further includes an injection-molded enveloping portion 25 coated outside the winding 11 and the stator core 12. The injection-molded enveloping portion 25 can be molded with a bulk molding compound (BMC) material, an inner part of the stator core 12 is exposed and other parts of the stator core 12 are all enveloped by the BMC material (the injection-molded enveloping portion 25). A front cover 3 and a rear cover 23 for supporting the rotating shaft 72 are embedded in the injection-molded enveloping portion 25 or integrally molded with the injection-molded enveloping portion 25. The front cover 3 and the rear cover 23 can be BB covers. The front cover 3 and the rear cover 23 can be injection-molded together with the stator assembly 2 while the stator assembly 2 is enveloped by BMC injection-molding, or can be embedded in and secured to the stator assembly 2 by means of being pressed after the injection molding is finished. Thus, an assembling process of the front cover 3 and the rear cover 23 has high accuracy, so as to significantly reduce noise and vibration of the electric motor, thus effectively enhancing the user experience. The stator assembly 2 is enveloped directly by injection molding with the BMC material to form the injection-molded enveloping portion 25, and an end cover is not needed to be mounted to the stator, such that the manufacturing process is simple, and the material cost and the production cost are low. In addition, the stator assembly 2 is entirely enveloped with the injection-molded enveloping portion 25. In the stator assembly 2 formed after the injection-molded enveloping, the BMC material envelops the whole semi-finished stator 1, and only a part of an inner cavity 121 of the stator core 12 is exposed, so the stator assembly 2 has a great waterproof effect, which can prevent defects such as an electric leakage or a short circuit from being caused, thus exhibiting great reliability.

Specifically, the front cover 3 is pressed and embedded in the injection-molded enveloping portion 25 or is placed in an injection mould to be positioned during the injection molding of the injection-molded enveloping portion 25. The rear cover 23 is pressed and embedded in the injection-molded enveloping portion 25 or is placed in the injection mould to be positioned during the injection molding of the injection-molded enveloping portion 25. Thus, the front cover 3 and the rear cover 23 have high positioning accuracy, and the electric motor has low vibration and noise.

Specifically, a power line 13 is connected to the winding 11, and an end of the power line 13 connected with the winding 11 is enveloped by the injection-molded enveloping portion 25, thus providing a great waterproof effect. In a specific application, the winding 11 (an enameled wire) is wound upon the stator core 12, then the power line 13 is welded, and the semi-finished stator 1 is attained after this processing. A manufacturing process of the semi-finished stator 1 has advantages of simpleness, high efficiency and a high automatic level with respect to a conventional induction electric motor, thus playing an important role in reducing the production cost. The BMC injection molding is carried out to form the injection-molded enveloping portion 25 directly after the manufacturing of semi-finished stator 1 is finished, and the material after the injection molding is namely the stator assembly 2. The semi-finished stator 1 does not need to go through a conventional impregnation process, but is enveloped through the BMC injection molding, which is simple and exhibits high efficiency, without a long turnaround period, so the total manufacturing cost is reduced significantly.

Specifically, the injection-molded enveloping portion 25 has a first accommodating groove 2501 for accommodating the front cover 3, and the front cover 3 may be pressed and embedded in the first accommodating groove 2501 in an interference manner. The front cover 3 has high positioning accuracy, and the electric motor has a stable and quiet operation process. A first bearing 61 is provided in the front cover 3, and the rotating shaft 72 has an end running through the first bearing 61. Alternatively, the front cover 3 can be placed in the injection mould to be positioned during the injection molding of the injection-molded enveloping portion 25, that is, the front cover 3 can be directly embedded in the injection-molded enveloping portion 25 by insert injection-molding.

Specifically, the injection-molded enveloping portion 25 has a second accommodating groove 2502 for accommodating the rear cover 23, an outer side wall of the rear cover 23 abuts a side wall of the second accommodating groove 2502, an end of the rear cover 23 abuts a bottom of the second accommodating groove 2502, the rear cover 23 is integrally molded with a flange 2301 at an outer side thereof, and the flange 2301 is fitted and embedded in the side wall of the second accommodating groove 2502. The rear cover 23 has high positioning accuracy, and the electric motor has a stable and quiet operation process. A second bearing 62 is provided in the rear cover 23, and the rotating shaft 72 has another end running through the second bearing 62. The rear cover 23 can be pressed and embedded in the injection-molded enveloping portion 25. Alternatively, the rear cover 23 can be placed in the injection mould to be positioned during the injection molding of the injection-molded enveloping portion 25, that is, the rear cover 23 can be directly embedded in the injection-molded enveloping portion 25 by insert injection-molding.

In a specific application, the rear cover 23 and the front cover 3 form a supporting structure to support the rotor assembly 7, so that a smooth rotation of the electric motor is realized. The rear cover 23 can be placed in the mould to be enveloped by injection molding together with the semi-finished stator 1 while the BMC injection-molding enveloping is carried out for the semi-finished stator 1. An end face 231 of the rear cover 23 and an end face 222 of the injection-molded enveloping portion 25 form a pair of blocking surfaces, and an end face 232 of the rear cover 23 and an end face 223 of the injection-molded enveloping portion 25 also form a pair of blocking surfaces, so as to prevent an axial displacement of the rear cover 23. An end face 233 of the rear cover 23 and an end face 221 of the injection-molded enveloping portion 25 also form a pair of blocking surfaces, so as to bear an axial force produced by the rear cover 23 and the bearing 62. An end face 234 of the rear cover 23 and an end face 224 of the injection-molded enveloping portion 25 form a pair of radial blocking surfaces, so as to prevent a radial displacement of the rear cover 23. The front cover 3 is pressed into the injection-molded enveloping portion 25 with a side surface 31 of the front cover 3 being fitted with a side wall 24 of the injection-molded enveloping portion 25 in an interference manner, so that the front cover 3 is immobilized axially and radially. The front bearing (the first bearing 61) of the rotor assembly 7 is supported by the front cover 3 and the rear bearing (the second bearing 62) of the rotor assembly 7 is supported by the rear cover 23, so that a front end cover and a rear end cover necessary for the conventional induction electric motor are omitted, which saves the material cost of the electric motor significantly. In addition, the assembling process and procedure are simpler compared with the conventional induction electric motor, and a quality control level is improved.

Specifically, a ventilation blade 71 is connected to the rotor assembly 7, the stator assembly 2 has an inner cavity 20 for accommodating the ventilation blade 71, and the injection-molded enveloping portion 25 is provided with a ventilation hole 26 communicated with the inner cavity 20. A plurality of ventilation holes 26 is provided to form an active heat-removal system, which is beneficial for heat dissipation of the BMC material in the winding 11 and the injection-molded enveloping portion 25, and the heat dissipation effect is great, thus improving the reliability of the electric motor and prolonging the service life of the electric motor. The ventilation blades 71 can be squirrel-cage blades.

In the electric motor provided in the present disclosure, the front cover 3 and the rear cover 23 have high assembling accuracy, the electric motor has low noise and vibration, and thus the user experience can be improved effectively. The stator assembly 2 is enveloped directly by injection molding with the BMC material, so as to form the injection-molded enveloping portion 25, and the end cover is not needed to be mounted to the stator, such that the manufacturing process is simple, and the material cost and the production cost are low. In addition, the stator assembly 2 is entirely enveloped with the injection-molded enveloping portion 25, to provide a great waterproof effect, so defects such as an electric leakage or a short circuit are prevented from being caused and thus great reliability is exhibited.

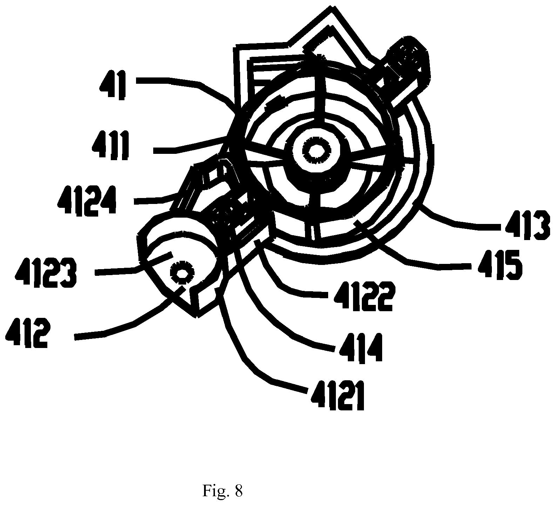

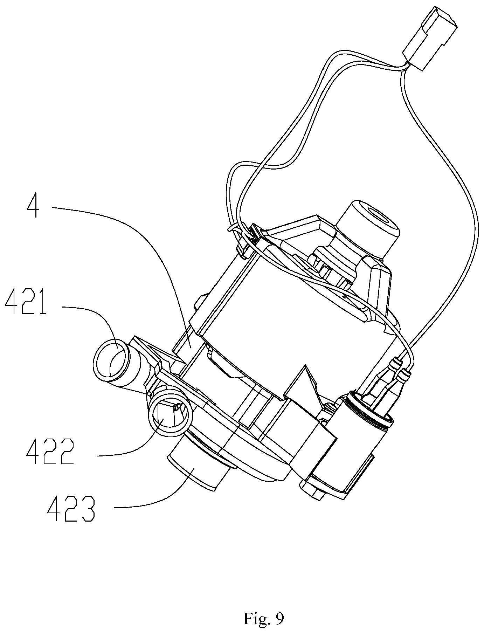

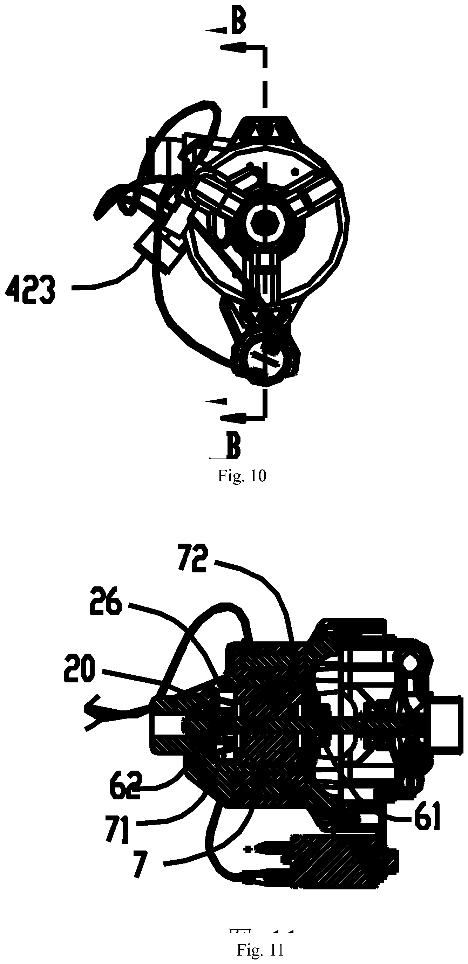

As illustrated in Fig. 1 to Fig. 11, embodiments of the present disclosure further provides a washing pump 120. The washing pump 120 includes a lower pump housing 41, and further includes the electric motor mentioned above, and the electric motor is connected to the lower pump housing 41.

Specifically, the lower pump housing 41 has a protruding post 411, and the stator assembly 2 of the electric motor has a positioning hole 27 for the protruding post 411 to be inserted therein. At least two protruding posts 411 and at least two the positioning holes 27 are provided. In the present disclosure, four protruding posts 411 and four positioning holes 27 are provided. Alternatively, the stator assembly 2 of the electric motor has the protruding post 411, and the lower pump housing 41 has the positioning hole 27 for the protruding post 411 to be inserted therein. The protruding post 411 and the positioning hole 27 are used for assembling and positioning, so as to prevent the lower pump housing 41 from rotating during the assembling, thus providing great reliability.

Specifically, a capacitor mounting foot 412 is provided at a side surface of the lower pump housing 41, and the capacitor mounting foot 412 includes a capacitor contacting wall 4123 in contact with a capacitor and connecting ribs 4122, 4124 connected between the capacitor contacting wall 4123 and a side wall of the lower pump housing 41. Alternatively, the capacitor mounting foot 412 is integrally injection-molded with the injection-molded enveloping portion 25.

Specifically, the capacitor contacting wall 4123 exhibits an arc shape, two connecting ribs are provided, and the capacitor contacting wall 4123, the two connecting ribs 4122, 4124, and the side surface of the lower pump housing 41 together form a closed annular structure. In the present disclosure, the capacitor mounting foot 412 is provided to the side surface of the lower pump housing 41, the capacitor contacting wall 4123 of the capacitor mounting foot 412 is connected with the side wall 413 of the lower pump housing 41, a semi-arc-shaped capacitor contacting wall 4123 is formed at an outer side of the capacitor contacting wall 4123, the semi-arc-shaped capacitor contacting wall 4123 forms a closed reinforcing rib structure through the connecting rib 4122 and the connecting rib 4124. The semi-arc-shaped capacitor contacting wall 4123 is connected to a side wall 415 of the lower pump housing 41 by means of a connecting structure 414 located between the connecting ribs 4122, 4124. With the above configuration, the capacitor mounting foot 412 has a firm structure, a defect (such as a breakage phenomenon) of the capacitor mounting foot 412 in the using process or the assembling process can be prevented, and thus great reliability is provided.

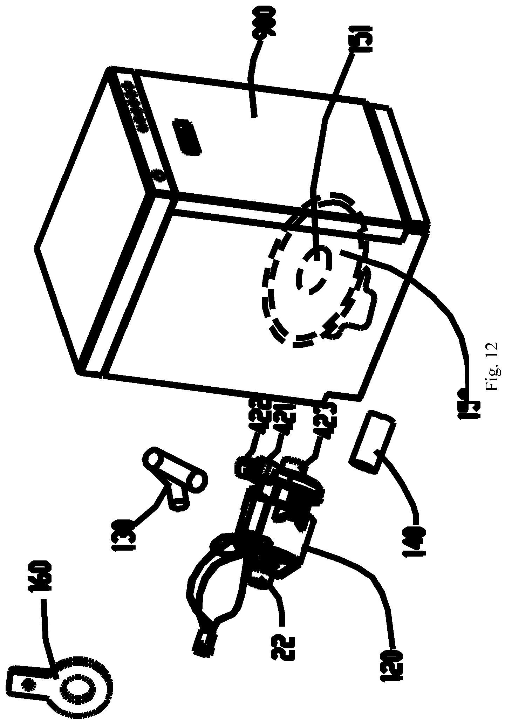

As illustrated in Fig. 1 to Fig. 12, embodiments of the present disclosure further provide a dishwasher, the dishwasher includes a dishwasher body 900, and the washing pump 120 mentioned above is connected to the dishwasher body 900. In the washing pump 120, the stator assembly 2 of the electric motor is enveloped directly by injection molding with the BMC material to form the injection-molded enveloping portion 25, and the end cover is not needed to be mounted to the stator, such that the manufacturing process is simple, and the material cost and the production cost are low. In addition, the stator assembly 2 is entirely enveloped with the injection-molded enveloping portion 25, to provide a great waterproof effect, so defects such as an electric leakage or a short circuit are prevented from being caused and thus great reliability is exhibited.

Specifically, a pump assembly 4 is connected to the washing pump 120, and the pump assembly 4 has a water inlet 423, a first water outlet 421 and a second water outlet 322. The water inlet 423 is connected to the dishwasher body 900 through a water-input pipe 140, and the first water outlet 421 and the second water outlet 322 are connected to the dishwasher body 900 through a water-output pipe 130.

Specifically, a base plate 150 is arranged in the dishwasher body 900, and an mounting hole site 151 is disposed in the base plate 150. The injection-molded enveloping portion 25 of the stator of the electric motor in the washing pump 120 is provided with a rear boss 22 integrally molded with the injection-molded enveloping portion 25, the rear boss 22 is inserted into the mounting hole site 151, and a rear sleeve 160 is connected to the rear boss 22. At least two reinforcing ribs 21 are provided at a side surface of the rear boss 22. In a specific application, a connection between the dishwasher body 900 and the washing pump 120 includes a connection of the dishwasher body 900 with the water inlet 423 of the pump assembly 4 through the water-input pipe 140 (a rubber pipe), a connection of the dishwasher body 900 with the first water outlet 421 and the second water outlet 322 of the pump assembly 4 through the water-output pipe 130 (a rubber pipe), and a connection of the dishwasher body 900 with the rear boss 22 through the rear sleeve 160, and the three connections are connected with the base plate 150 respectively. The rear boss 22 is supported by three reinforcing ribs 21. With the above connection manner, the electric motor has low vibration, which can effectively reduce the noise and vibration of the whole machine.

Embodiments of the present disclosure further provide a manufacturing method for an electric motor, which can be used to manufacture the electric motor mentioned above. The manufacturing method includes following actions: a stator core 12 and a rotor assembly 7 are produced, a winding 11 is wound upon the stator core 12, a power line 13 is connected to the winding 11 to form a semi-finished stator 1, the semi-finished stator 1 is placed in an injection mould to injection-mold an injection-molded enveloping portion 25 enveloping outer sides of the winding 11 and the stator core 12, a front cover 3 or/and a rear cover 23 for supporting the rotor assembly 7 are pressed and embedded in the injection-molded enveloping portion 25, or the front cover 3 or/and the rear cover 23 for supporting the rotor assembly 7 is placed in the injection mould to be positioned through the injection molding during the injection molding of the injection-molded enveloping portion 25, so a stator assembly 2 is attained, and the rotor assembly 7 is rotatably connected in the stator assembly 2. That is, the front cover 3 and the rear cover 23 can be pressed and embedded in the injection-molded enveloping portion 25, or can also be placed in the injection mould to be enveloped and positioned by means of the injection molding during the injection molding of the injection-molded enveloping portion 25. Thus, the positioning accuracy is high, and the electric motor operates stably and quietly. The power line 13 is welded to obtain the semi-finished stator 1 after the winding 11 (an enameled wire) is wound upon the stator core 12, and then the semi-finished stator 1 is placed in the injection mould so as to injection-mold the injection-molded enveloping portion 25 coating outer sides of the winding 11 and the stator core 12.

In the electric motor, the washing pump 120, the dishwasher and the manufacturing method for the electric motor provided by embodiments of the present disclosure, the front cover 3 and the rear cover 23 can be injection-molded and positioned together with the stator assembly 2 while the stator assembly 2 is enveloped through BMC injection molding, or can also be embedded in and secured to the stator assembly 2 by means of being pressed after the injection molding is finished. An assembling process of the front cover 3 and the rear cover 23 has high accuracy, so as to significantly reduce the noise and vibration of the electric motor, thus effectively enhancing the user experience. The stator assembly 2 is enveloped directly through injection molding to form the injection-molded enveloping portion 25, and an end cover is not needed to be mounted to the stator, such that the manufacturing process is simple, and the material cost and the production cost are low. In addition, the stator assembly 2 is entirely enveloped with the injection-molded enveloping portion 25, so the electric motor has a great waterproof effect, and defects such as an electric leakage or a short circuit are prevented from being caused, thus exhibiting great reliability.

The above is only the preferred embodiments of the present disclosure, and not intended to limit the present disclosure. Any modification, equivalent replacement or improvement made within the spirit and principle of the present disclosure should be included in the protection scope of the present disclosure.

## Claims

1. An electric motor, comprising a stator assembly and a rotor assembly rotatably disposed in the stator assembly, the rotor assembly comprising a rotating shaft, the stator assembly comprising a stator core and a winding wound around the stator core, wherein the stator assembly further comprises an injection-molded enveloping portion enveloping outer sides of the winding and the stator core, and a front cover and a rear cover for supporting the rotating shaft are embedded in the injection-molded enveloping portion or integrally molded with the injection-molded enveloping portion.

2. The electric motor according to claim 1, wherein the front cover is pressed and embedded in the injection-molded enveloping portion or is placed in an injection mould to be positioned during injection molding of the injection-molded enveloping portion; the rear cover is pressed and embedded in the injection-molded enveloping portion or is placed in the injection mould to be positioned during the injection molding of the injection-molded enveloping portion.

3. The electric motor according to claim 1, wherein a power line is connected to the winding, and an end of the power line connected with the winding is enveloped by the injection-molded enveloping portion.

4. The electric motor according to claim 1, wherein the injection-molded enveloping portion has a first accommodating groove for accommodating the front cover, the front cover is pressed and embedded in the first accommodating groove in an interference manner, a first bearing is provided in the front cover, and the rotating shaft runs through the first bearing.

5. The electric motor according to any one of claims 1 to 4, wherein that the injection-molded enveloping portion has a second accommodating groove for accommodating the rear cover, an outer side wall of the rear cover abuts against a side wall of the second accommodating groove, and an end of the rear cover abuts against a bottom of the second accommodating groove, the rear cover is integrally molded with a flange at an outer side thereof, the flange is fitted and embedded in the side wall of the second accommodating groove, a second bearing is provided in the rear cover, and the rotating shaft runs through the second bearing.

6. The electric motor according to any one of claims 1 to 4, wherein a ventilation blade is connected to the rotor assembly, the stator assembly has an inner cavity for accommodating the ventilation blade, and the injection-molded enveloping portion is provided with a ventilation hole communicated with the inner cavity.

7. A washing pump, comprising a lower pump housing, wherein the washing pump further comprises an electric motor according to any one of claims 1 to 6, and the electric motor is connected to the lower pump housing.

8. The washing pump according to claim 7, wherein that the lower pump housing has a protruding post, and the stator assembly of the electric motor has a positioning hole for the protruding post to be inserted therein; or, the stator assembly of the electric motor has a protruding post, and the lower pump housing has a positioning hole for the protruding post to be inserted therein.

9. The washing pump according to claim 7, wherein a capacitor mounting foot is provided at a side surface of the lower pump housing, the capacitor mounting foot comprises a capacitor contacting wall in contact with a capacitor and a connecting rib connected between the capacitor contacting wall and a side wall of the lower pump housing; or, the capacitor mounting foot is integrally injection-molded with the injection-molded enveloping portion.

10. The washing pump according to claim 9, wherein the capacitor contacting wall exhibits an arc shape, two connecting ribs are provided, and the capacitor contacting wall, the two connecting ribs and the side surface of the lower pump housing form a closed annular structure.

11. A dishwasher, comprising a dishwasher body, wherein the dishwasher body is connected with a washing pump according to any one of claims 7 to 10.

12. A manufacturing method for an electric motor, wherein the manufacturing method comprises:
producing a stator core and a rotor assembly;
winding a winding wire upon the stator core;
connecting a power line to the winding wire to form a semi-finished stator;
placing the semi-finished stator in an injection mould to injection-mold an injection-molded enveloping portion enveloping outer sides of the winding wire and the stator core;
pressing and embedding a front cover or/and a rear cover for supporting the rotor assembly in the injection-molded enveloping portion, or placing the front cover or/and the rear cover for supporting the rotor assembly in the injection mould to be positioned through injection molding during injection molding of the injection-molded enveloping portion, so as to obtain a stator assembly; and
rotatably connecting the rotor assembly in the stator assembly.
